# EUROPÄISCHE PATENTANMELDUNG

(11) **EP 1 201 610 A2**
(43) Veröffentlichungstag der Anmeldung: **02.05.2002**
(21) Anmeldenummer: 01125115.4
(22) Anmeldetag: 23.10.2001
(51) Int. Cl.: C03B 23/20, C03B 23/203, C04B 37/00, B23K 26/00

(54) **Verfahren und Vorrichtung zum thermischen Fügen von Bauteilen aus silikatischen Werkstoffen**

(30) Priorität: 24.10.2000 DE 10053402
(71) Anmelder: Institut für Fügetechnik und Werkstoffprüfung GmbH, 07745 Jena (DE); Glamaco Maschinenbau GmbH, 01640 Coswig (DE)
(72) Erfinder: Müller, Hartmut, 07749 Jena (DE); Gruhle, Andreas, 01689 Weinböhla (DE); Petrich, Andreas, 07743 Jena (DE); Vetters, Andre, 01689 Weinböhla (DE); Bliedtner, Jens, 07745 Jena (DE)
(74) Vertreter: Niestroy, Manfred

(57) **Zusammenfassung**

Bei einem Verfahren zum thermischen Fügen von Bauteilen (B) aus Silikat-Werkstoffen an einer Fügestelle (S) werden die miteinander zu fügenden Bauteile (B) wenigstens in einem Bereich um die Fügestelle (S) auf eine Vorwärmtemperatur unterhalb ihres Erweichungspunktes erwärmt. In die erwärmten Bauteile (B) wird an der Fügestelle (S) zusätzliche Wärmeenergie eingebracht, um die Fügestelle (S) auf eine Fügetemperatur bei oder oberhalb der Temperatur des Erweichungspunktes zu erwärmen. Vorzugsweise wird für den zusätzlichen Wärmeeintrag eine Lasereinrichtung (6) verwendet. Weiterhin wird eine für das Verfahren geeignete Vorrichtung angegeben. Hiermit lassen sich ebene oder auch beliebig räumlich geometrische Bauteile (B) aus Silikat-Werkstoffen in sehr hoher Qualität spannungsarm miteinander verbinden.

## Beschreibung

### Gebiet der Erfindung

Die Erfindung bezieht sich auf ein Verfahren zum thermischen Fügen von Bauteilen aus silikatischen Werkstoffen, Silikat-Verbundwerkstoffen und Silikat-Kompositwerkstoffen an einer Fügestelle. Weiterhin bezieht sich die Erfindung auf eine zur Durchführung des Verfahrens geeignete Vorrichtung.

### Stand der Technik

Unter silikatischen Werkstoffen werden glasartige Werkstoffe verstanden. Hierzu zählen insbesondere Werkstoffe wie Borosilikat-, Kalk-Natron- und Quarzglas. Weiterhin werden hierunter silikatischen Werkstoffen auch glaskeramische Werkstoffe verstanden, wie beispielsweise Zerodur oder Ceran. Diese wie auch Silikat-Verbundwerkstoffe und Silikat-Kompositwerkstoffe werden im folgenden kurz als Silikat-Werkstoffe bezeichnet.

Zum Verbinden von Bauteilen aus derartigen Werkstoffen sind aus dem Stand der Technik Schweißverfahren bekannt, bei denen die miteinander zu verbindenden Bauteile an ihrer Fügestelle aufgeschmolzen und nach dem Verbinden in weiteren Prozeßstufen abgekühlt werden.

Herkömmlicherweise werden die Bauteile an ihren Fügestellen mittels eines Brenners auf eine Fügetemperatur, die oberhalb des Erweichungspunktes der betreffenden Werkstoffe liegt, erwärmt und dabei aufgeschmolzen, so daß hernach an der Fügestelle eine stoffschlüssige Verbindung entsteht. Allerdings weisen die so hergestellten Fügestellen eine sehr geringe Qualität auf, da derartige Verfahren mit hohen Maß- und Formungenauigkeiten verbunden sind und sich schlecht reproduzieren lassen. Dies äußert sich insbesondere auch durch eine starke Wulstbildung im Bereich der Fügestelle. Unter Umständen kann es dabei zu einem unerwünschten Versatz der Bauteil-ebenen kommen. Zudem können Verformungen auftreten. Problematisch sind hierbei insbesondere Bauteile mit geringen Wanddicken oder unterschiedlichen Erschmelzungseigenschaften.

Durch einen eng auf die Fügestelle konzentrierten Wärmeeintrag lassen sich die Maß- und Formungenauigkeiten verringern. Ein entsprechendes Verfahren hierzu ist aus der JP 60-191027 A bekannt. Diese offenbart ein Verfahren zum Verbinden von Glasstäben mittel Laserstrahlschweißen. Dabei werden die Enden zweier Glasstäbe unter einer Inertgasatmosphäre mittels eines Laserstrahls aufgeschmolzen und zusammengefügt, wobei in die Erschmelzungszone zusätzliches Glasmaterial eingebracht wird.

Bei derartigen Verfahren, die durch eine auf einen engen Bereich begrenzte Erwärmung der Fügestelle gekennzeichnet sind, können an den zusammengefügten Bauteilen insbesondere nahe der Fügestelle hohe Spannungen auftreten, die für die Festigkeit der Verbindung nachteilig sind. Insbesondere kann es unter ungünstigen Umständen zu Rißbildung oder Bauteilversagen kommen.

Verfahren, die sich für das thermische Fügen von Metallen eignen, sind zwar seit langem bekannt, aufgrund der materialspezifischen Unterschiede für Silikat-Werkstoffe jedoch nicht einsetzbar. Ursache hierfür sind unter anderem die erheblich geringere Wärmeleitfähigkeit sowie die verstärkte Rißneigung der Silikat-Werkstoffe im Vergleich zu metallischen Werkstoffen.

### Beschreibung der Erfindung

Der Erfindung liegt davon ausgehend die Aufgabe zugrunde, ein Verfahren zum thermischen Fügen von Bauteilen aus Silikat-Werkstoffen zu schaffen, das die Herstellung einer Fügestelle mit einer hohen Güte erlaubt. Weiterhin liegt der Erfindung die Aufgabe zugrunde, eine zur Ausübung des Verfahrens geeignete Vorrichtung anzugeben.

Diese Aufgabe wird durch ein Verfahren der eingangs genannten Art gelöst, bei dem die miteinander zu fügenden Bauteile wenigstens im einem Bereich um ihre Fügestelle auf eine Vorwärmtemperatur unterhalb ihres Erweichungspunktes erwärmt werden und in die erwärmten Bauteile an der Fügestelle zusätzliche Wärmeenergie eingebracht wird, um die Bauteile an der Fügestelle auf eine Fügetemperatur zu erwärmen, die bei oder oberhalb der Temperatur des jeweiligen Erweichungspunktes liegt.

Diese Vorgehensweise erlaubt die Schaffung einer qualitativ hochwertigen Fügeverbindung an Bauteilen mit im wesentlichen beliebiger räumlicher Geometrie, die weitestgehend frei von durch den Fügevorgang induzierten Spannungen ist. Insbesondere können auf diese Art und Weise dünnwandige Bauteile oder Bauteile mit unterschiedlichen Wanddicken oder unterschiedlichen Erschmelzungseigenschaften spannungsarm miteinander verbunden werden. Gleichzeitig lassen sich hohe Maß- und Formgenauigkeiten einhalten.

Mit der ersten Heizeinrichtung wird eine Erwärmung eines größeren Bereiches um die Fügestelle auf eine Vorwärmtemperatur knapp unterhalb der Erweichungspunkte der Werkstoffe der betreffenden Bauteile erzielt, wohingegen die zweite Heizeinrichtung lediglich in einem engen Bereich um die Fügestelle für ein Erreichen oder ein Überschreiten des jeweiligen Erweichungspunktes und damit für die Erwärmung auf die Fügetemperatur sorgt. Hierdurch läßt sich ein verhältnismäßig geringer Temperaturgradient im Bereich um die Fügestelle verwirklichen, der sich günstig auf den Spannungszustand an der erkalteten Fügestelle auswirkt.

Vorzugsweise wird die zusätzliche Wärmeenergie mittels eines Laserstrahls eingebracht. Dadurch läßt sich der zusätzliche Energieeintrag sowohl quantitativ als auch hinsichtlich des Eintragsortes sehr präzise einstellen. Da lediglich sehr eng begrenzte Bereiche auf eine Temperatur bei dem Erweichungspunkt erwärmt werden, ist die Gefahr des Verziehens der Bauteile sehr gering, so daß sich eine besonders hohe Maß- und Formgenauigkeit realisieren läßt.

Die eingebrachte Wärmeenergie wird beispielsweise über die Leistung der verwendeten Laserlichtquelle und die Einwirkzeit des Laserstrahls auf die Fügestelle eingestellt. Zumeist sind die Fügestellen jedoch deutlich größer als der mit dem Laserstrahl aufgebrachte Laserlichtfleck, so daß es erforderlich ist, den Laserstrahl über die Fügestelle zu bewegen. Vorzugsweise erfolgt dies mit einer hohen Geschwindigkeit, wodurch die zusätzliche Wärmeenergie gleichmäßig über die gesamte Fügestelle verteilt werden kann. Neben gepulsten Lasern können hierzu auch kontinuierliche Laser verwendet werden, deren Energieniveau für die stationäre Bestrahlung eines Punktes zu hoch wäre. Beispielsweise kann ein Laser mit einer Wellenlänge von 10,6 µm und einer Leistung von etwa 500 bis 2000 W eingesetzt werden. Es hat sich gezeigt, daß Geschwindigkeiten im Bereich 0,25m/s bis 10m/s gute Ergebnisse liefern, im Bereich von 0,5m/s bis 3m/s jedoch eine weitere Verbesserung der Güte der Fügestelle erzielt wird.

In einer vorteilhaften Ausgestaltung des erfindungsgemäßen Verfahrens wird der Laserstrahl mehrfach über die Fügestelle bewegt, so daß der Energieeintrag an den Auftrefforten diskontinuierlich erfolgt. Dabei kann der Laserstrahl pendelnd über die Fügestelle hin- und herbewegt werden. Allerdings ergeben sich dann je nach Lage der Punkte entlang der Fügestelle unterschiedliche Zeitintervalle zwischen den einzelnen Einwirkzeitpunkten des Laserstrahls. Eine weitergehende Vergleichmäßigung des Energieeintrags läßt sich beispielsweise dadurch realisieren, daß der Laserstrahl stets in der gleichen Richtung über die Fügestelle bewegt wird.

Weiterhin kann der Bewegung des Laserstrahls in einer ersten Richtung eine zusätzliche Bewegungskomponente quer zu der ersten Richtung überlagert werden, um die Erwärmung der Fügestelle besser an die Bauteilgeometrie anzupassen und um beispielsweise in ein dickeres Bauteil an der Fügeteile mehr Wärmeenergie einzubringen als in ein benachbartes dünneres Bauteil. Dies gilt entsprechend auch, wenn Bauteile mit unterschiedlichen Materialeigenschaften miteinander verbunden werden sollen. Überdies lassen sich auf diese Weise auch Fügestellen in Form von beliebig gekrümmten Linien in einem sehr eng begrenzten Bereich auf eine Fügetemperatur bei oder oberhalb des Erweichungspunktes erwärmen.

In einer weiteren, vorteilhaften Ausgestaltung des Verfahrens wird Wärmeenergie mit zwei Laserstrahlen in die Bauteile eingebracht. Hierzu können zwei verschiedene Laserlichtquellen eingesetzt werden. Der apparative Aufwand läßt sich jedoch verringern, indem der Laserstrahl einer Laserlichtquelle in zwei Teilstrahlen aufgespalten wird.

Unabhängig davon, ob eine oder zwei Laserlichtquellen verwendet werden, kann die Laserstrahlung auch dazu verwendet werden, eine Fügestelle von entgegengesetzten Seiten, etwa oberhalb und unterhalb der Bauteile, zu erwärmen. Dies ist insbesondere bei größeren Materialdicken empfehlenswert, um eine hohe Maß- und Formgenauigkeit zu erzielen.

Auch kann einer von zwei auf die Fügestelle gerichteten Laserstrahlen schärfer fokussiert werden als der andere. Während der schärfer fokussierte Laserstrahl dazu dient, die Fügestelle auf die Fügetemperatur zu bringen, kann der breiter streuende andere Laserstrahl beispielsweise zum Zwecke der Erwärmung auf die Vorwärmtemperatur eingesetzt werden oder aber auch als zusätzliche Wärmequelle, um den Nahbereich der Fügestelle auf eine Temperatur zwischen der Fügetemperatur und der Vorwärmtemperatur zu erwärmen und so den Temperaturgradienten in diesen Bereich im Hinblick auf eine besonders spannungsarme Fügeverbindung zu beeinflussen.

Eine weitere Möglichkeit zur gezielten Steuerung des Wärmeeintrages in die Fügestelle besteht in der Verwendung einer Einrichtung zur Beeinflussung der Querschnittsgeometrie des Laserlichtflecks und/oder zur Beeinflussung der Strahlungsintensität im Querschnitt des Laserlichtflecks. Hierdurch wird die Intensität des auf die Bauteile an der Fügestelle auftreffenden Laserlichtfleckes in Abhängigkeit beispielsweise der Materialeigenschaften oder der Geometrie des jeweiligen Bauteiles eingestellt, derart, daß für die auf unterschiedliche Bauteile auftreffenden Abschnitte des Laserlichtfleckes die Intensität individuell eingestellt wird. Dadurch kann beispielsweise ein dickeres Bauteil an der Fügestelle einer höheren Strahlungsleistung ausgesetzt werden als ein dünneres Bauteil.

In einer weiteren, vorteilhaften Ausgestaltung des Verfahrens wird die Fügestelle bei Fügetemperatur gestaucht. Hierdurch läßt sich eine sehr innige stoffschlüssige Verbindung der beiden Bauteile verwirklichen. Vorzugsweise wird die Fügestelle nach dem erfolgten Verbinden wieder gestreckt, wodurch eine weitere Verbesserung im Hinblick auf die Festigkeit der Bauteilverbindung erreicht wird. Zudem werden hierdurch Schweißnahtfehler stark vermindert und die Schweißnahtqualität deutlich verbessert.

Durch einen temperaturgesteuerten Abkühlvorgang nach dem erfolgten Verbinden läßt sich das Spannungsverhalten in der Fügestelle im Hinblick auf die verbleibenden Restspannungen weiter verbessern. Im Idealfall kann im Bereich der Fügestelle ein spannungsfreier Zustand realisiert werden.

Auch das Erwärmen der Bauteile kann temperaturgesteuert erfolgen, um die Güte der Fügeverbindung zu verbessern. Bevorzugt wird während des Erwärmens in den Bauteilen ein Temperaturfeld induziert, das zu der Fügestelle hin einen ansteigenden Temperaturgradienten aufweist. Dies ist insbesondere dann vorteilhaft, wenn sehr große Bauteile miteinander gefügt werden sollen, die nicht in ihrer Gesamtheit, sondern lediglich im Bereich um die Fügestelle erwärmt werden können. Durch die gezielte Einstellung des Temperaturfeldes werden die eventuell nach dem Fügevorgang noch verbleibenden Spannungen jedoch sehr gering gehalten.

In einer weiteren, vorteilhaften Ausgestaltung der Erfindung kann in die Fügestelle bei Fügetemperatur ein Zusatzmaterial eingebracht werden, um beispielsweise Materialverluste oder einen Fügespalt auszugleichen oder die Materialeigenschaften an der Fügestelle in einer gewünschten Art und Weise zu beeinflussen. Das zusätzliche Material kann in pulverförmiger, flüssiger oder fester Form zugeführt werden. Vorzugsweise kommen hierzu Silikat-Werkstoffe in Frage, die an der Fügestelle aufschmelzen. Es ist jedoch möglich, in die Fügestelle nicht aufschmelzende Zusatzwerkstoffe einzubringen oder dieser ein Inertgas zuzuleiten.

Prinzipiell ist es möglich, die miteinander zu fügenden Bauteile erst während oder nach dem Erwärmen zueinander zu positionieren. In einer vorteilhaften Ausgestaltung des Verfahrens werden die Bauteile jedoch bereits vor dem Erwärmen in gewünschter Zuordnung, d. h. in ihrer Fügeposition zueinander fixiert. Dies hat den Vorteil, daß der Energieeintrag zum Erwärmen über die Vorwärmtemperatur hinaus auf die Fügetemperatur über eine gemeinsame Einrichtung erfolgen kann. Überdies wird hierdurch eine hohe Form- und Maßgenauigkeit begünstigt.

Die oben genannte Aufgabe wird weiterhin gelöst durch eine Vorrichtung zum thermischen Fügen von Bauteilen aus Silikat-Werkstoff, umfassend eine erste Heizeinrichtung zum Erwärmen von Bereichen der Bauteile, um die Fügestelle auf eine Vorwärmtemperatur unterhalb ihres Erweichungspunktes zu bringen, und eine zweite Heizeinrichtung zum zusätzlichen Wärmeeintrag in die Fügestelle, um die vorerwärmte Fügestelle auf eine Fügetemperatur bei oder oberhalb der Temperatur des jeweiligen Erweichungspunktes weiter zu erwärmen.

Die erfindungsgemäße Vorrichtung ermöglicht die Herstellung einer spannungsarmen, idealerweise spannungsfreien Fügestelle im wesentlichen unabhängig von der Geometrie und den Materialeigenschaften der miteinander zu verbindenden Bauteile. Gleichzeitig läßt sich eine hohe Maß- und Formgenauigkeit einhalten.

In einer vorteilhaften Ausgestaltung der Vorrichtung als zweite Heizeinrichtung eine Lasereinrichtung mit einer Laserlichtquelle und einer Fokussiereinheit zum Fokussieren des von der Laserlichtquelle abgestrahlten Laserlichts auf die Fügestelle vorgesehen. Damit läßt sich der Wärmeeintrag in die Fügestelle sowohl hinsichtlich des Eintragortes als auch der Höhe der eingebrachten Energie sehr präzise einstellen, so daß die miteinander zu verbindenden Bauteile lediglich in einem sehr eng begrenzten Bereich aufgeschmolzen werden. Dies ist insbesondere für eine sehr hohe Maß- und Formgenauigkeit günstig.

Vorzugsweise sind weiterhin Einrichtungen zum Bewegen des Laserstrahls vorgesehen, um den mit dem Laserstrahl erzeugten Laserlichtfleck über die Bauteile zu führen. Hierdurch lassen sich auch größere Fügestellen gleichmäßig erwärmen und weiterhin unterschiedliche Bauteilgeometrien, insbesondere unterschiedliche Materialdicken und unterschiedliche Materialeigenschaften, insbesondere unterschiedliche Erweichungspunkte der betreffenden Bauteilwerkstoffe, berücksichtigen.

Die Bewegungseinrichtungen umfassen beispielsweise eine Linearführung, an der die Lasereinrichtung geführt ist, sowie eine Antriebseinrichtung zur Bewegung der Lasereinrichtung entlang der Linearführung. Damit lassen sich insbesondere geradlinige Fügestellen sehr präzise und effizient herstellen.

Weiterhin ist es möglich, die Laserlichtquelle stationär anzuordnen, so daß diese selbst nicht bewegt werden muß. In diesem Fall umfaßt die Bewegungseinrichtungen eine Ablenkeinrichtung, um den von der Laserlichtquelle kommenden Laserstrahl scannend über die Fügestelle lenken zu können. Da in diesem Fall die bewegten Massen sehr gering bleiben, läßt sich auf diese Art und Weise eine sehr schnelle Bewegung des Laserstrahls über die Fügestelle realisieren.

Die Ablenkeinrichtung weist beispielsweise schwingende oder rotierende Spiegel auf, mit denen sehr hohe Geschwindigkeiten des Auftreffpunktes des Laserstrahls auf die Fügestelle in einer Größenordnung bis zu 10m/s problemlos erreichbar sind. Hierzu kommen beispielsweise sogenannte Scannerspiegel zum Einsatz, die von einer Galvanometeranordnung angetrieben werden.

In einer vorteilhaften Ausgestaltung der Vorrichtung umfassen die Bewegungseinrichtungen weiterhin Mittel zur Überlagerung einer zweiten Bewegungskomponente, die im wesentlichen quer zu einer ersten Bewegungskomponente des Laserstrahls gerichtet ist. Damit läßt sich beispielsweise der Auftreffpunkt des Laserstrahls auf die Fügestelle in zwei zueinander orthogonalen Achsrichtungen positionieren. Dies kann bei der vorstehend genannten Linearführung über einen zweiten Schlitten oder eine schwenkbare Anordnung der Lasereinrichtung an der Linearführung erfolgen. Auch ist es möglich, den Laserstrahl durch eine Ablenkeinrichtung quer zu seiner Hauptbewegungsrichtung zu verschwenken. Im Falle der stationär angeordneten Laserlichtquelle kann eine Bewegungseinrichtung mit zwei unabhängig voneinander bewegbaren Ablenkeinrichtungen vorgesehen werden.

In einer weiteren, vorteilhaften Ausgestaltung der Erfindung umfaßt die Vorrichtung eine Wärmekammer zur Aufnahme der miteinander zu fügenden Bauteile. Hierdurch wird einerseits eine sehr genaue Einhaltung eines gewünschten Temperaturniveaus ermöglicht. Andererseits werden die Energieverluste bei der Erwärmung der Bauteile gering gehalten. Prinzipiell ist es möglich, die Wärmekammer derart auszugestalten, daß die miteinander zu verbindenden Bauteile vollständig von dieser aufgenommen werden. Bei sehr großen Bauteilen ist die Wärmekammer jedoch derart ausgebildet, daß die Bauteile lediglich mit der Fügestelle sowie einem Umgebungsbereich in der Wärmekammer positioniert sind.

Im großtechnischen Einsatz sind auch Wärmekammern verwendbar, durch welche die miteinander zu verbindenden Bauteile kontinuierlich hindurchgeführt werden. Wird eine teilweise offene bzw. teilisolierte Wärmekammer verwendet, so empfiehlt es sich, in den Öffnungsbereichen Wärmeschleusen vorzusehen, um die Temperaturverluste gering zu halten und eine Beeinträchtigung des Fügevorganges durch Zuglufteffekte auszuschließen.

Vorzugsweise werden die vorstehend erläuterten Lasereinrichtungen außerhalb der Wärmekammer angeordnet. Um den Laserstrahl dennoch auf die Fügestelle in der Wärmekammer richten zu können, weist diese eine laserlichtdurchlässige Wärmeschleuse auf. Die Wärmeschleuse wird beispielsweise durch ein für das Laserlicht durchlässiges, jedoch für Gase undurchlässiges Fenster gebildet, so daß Temperaturverluste in der Wärmekammer weitestgehend vermieden werden. In einer alternativen Ausführungsvariante ist die Wärmeschleuse eine Öffnung, in der quer zur Richtung des Laserstrahles ein Gasstrom geführt ist. Dieser verhindert ebenfalls weitestgehend den Verlust von Wärmeenergie aus der Wärmekammer und den Eintritt von Zugluft.

Vorzugsweise umfaßt die erste Heizeinrichtung mehrere Heizquellen, die einzeln oder gruppenweise separat ansteuerbar sind. Dadurch läßt sich in den Bauteilen ein gewünschtes Temperaturfeld gezielt einstellen, so daß starke Temperaturgradienten in den Bauteilen, welche den Spannungszustand nach dem Abkühlen beeinflussen, vermieden werden können. Insbesondere läßt sich ein zu der Fügestelle hin ansteigender Temperaturgradient verwirklichen. Überdies können die Heizquellen auch dazu verwendet werden, den Abkühlprozeß nach dem Fügen der Bauteile in gewünschter Weise zu beeinflussen.

Zur genaueren Einstellung des Temperaturverlaufs ist vorzugsweise eine Steuereinrichtung zur Einstellung der abzugebenden Wärmemengen der Heizquellen vorgesehen. Eine weitere Verbesserung läßt sich bevorzugt dadurch erzielen, daß den getrennt angesteuerten Heizquellen Temperatursensoren zugeordnet werden, um eine Ist-Tempe-ratur zu erfassen. In der Steuereinrichtung wird dann eine Abweichung zwischen der Ist-Temperatur und der Soll- Temperatur ermittelt und die abzugebende Wärmemenge in Abhängigkeit der ermittelten Abweichung eingestellt. Damit läßt sich eine Temperaturregelung mit einem geschlossenen Regelkreis verwirklichen. Als Temperatursensoren werden bevorzugt Thermoelemente verwendet.

In einer weiteren, vorteilhaften Ausgestaltung der Vorrichtung ist mindestens ein der Fügestelle zugeordneter Temperatursensor vorgesehen. Die zusätzlich über die zweite Heizeinrichtung eingebrachte Wärmemenge wird dann in Abhängigkeit von der erfaßten Ist-Temperatur der Temperatursensoren eingestellt. Dies ermöglicht eine sehr präzise Einhaltung einer gewünschten Fügetemperatur, wobei als Temperatursensoren bevorzugt Pyrometer zum Einsatz gelangen.

Weiterhin kann in der Wärmekammer eine Einrichtung zur Erzeugung eines Umluftstromes vorgesehen werden, wozu beispielsweise Ventilatoren oder Lüfter in die Wärmekammer integriert werden. Hiermit kann einerseits eine gezielte Kühlung nach dem Fügen erfolgen. Andererseits kann die Umlufteinrichtung zur Unterstützung der ersten Heizeinrichtung verwendet werden, um das Temperaturniveau zu vergleichmäßigen. Letzteres ist insbesondere dann von Vorteil, wenn die miteinander zu fügenden Bauteile vollständig in der Wärmekammer aufgenommen werden.

In einer weiteren, vorteilhaften Ausgestaltung der Vorrichtung ist ein Strahlteiler zur Aufspaltung des von der Laserlichtquelle kommenden Laserstrahls in zwei auf die Bauteile ausrichtbare Teilstrahlen in den Laser-Strahlengang eingekoppelt. Dies erlaubt die Verwendung einer einzigen Laserlichtquelle, wobei die erzeugten Teilstrahlen zu unterschiedlichen Zwecken einsetzbar sind und bei Bedarf auch noch in weitere Teilstrahlen aufgespaltet werden können.

Beispielsweise ist einer der Teilstrahlen nicht unmittelbar über die Fügestelle, sondern über dessen nähere Umgebung geführt. Dabei kann dieser Teilstrahl dazu verwendet werden, diesen überstrichenen Bereich auf die gewünschte Vorwärmtemperatur zu bringen. Der Teilstrahl bildet dann einen Teil der ersten Heizeinrichtung aus. Es ist auch möglich, diesen Teilstrahl allein im Sinne der ersten Heizeinrichtung zu verwenden. Auch kann dieser Teilstrahl dazu genutzt werden, einen steilen Temperaturgradienten zwischen der eigentlichen Fügestelle und der Umgebung derselben abzuschwächen, d. h. diesen Bereich auf eine Temperatur zwischen der Vorwärmtemperatur und der Fügetemperatur zu erwärmen.

Weiterhin ist es abweichend davon denkbar, zwei Teilstrahlen aufeinander gegenüberliegende Seiten der Fügestelle zu lenken, um insbesondere bei größeren Materialdicken eine gleichmäßigere Erwärmung auf die Fügetemperatur zu ermöglichen und damit einen Verzug der Bauteile im Bereich der Fügestelle zu verhindern.

In einer weiteren, vorteilhaften Ausgestaltung der Erfindung ist eine Einrichtung vorgesehen, mit welcher die Strahlungsintensität über die Querschnittsfläche des erzeugten Laserlichtflecks hinweg einstellbar ist. Entsprechend der jeweiligen Bearbeitungsaufgabe sind hierdurch individuelle Intensitätsverteilungen zum Fügen möglich, um unterschiedliche Materialdicken, Geometrien oder Materialeigenschaften der betreffenden Bauteile zu berücksichtigen.

Diese Einrichtung besteht beispielsweise aus einer Teleskopanordnung oder aus diffraktiven optischen Elementen. Zum Erreichen der für das Fügeverfahren erforderlichen Strahlungsintensität ist weiterhin eine Fokussiereinrichtung vorgesehen, in welcher beispielsweise reflektierende optische Komponenten, wie Spiegel, oder auch transmittiv wirksame optische Komponenten, wie Linsen, zusammenwirken. Bei Verwendung von bewegten Ablenkeinrichtungen für den Laserstrahl, die in zwei unterschiedlichen Achsrichtungen wirksam sind, kommt bevorzugt eine F-Theta-Optik zum Einsatz, um auch bei langen linienförmigen Fügestellen gleichbleibende Fokussierbedingungen zu erreichen.

In einer weiteren, vorteilhaften Ausgestaltung der Vorrichtung ist mindestens eine Einrichtung zum Bewegen der Bauteile zueinander vorgesehen. Vorzugsweise umfaßt diese einen Vorschubantrieb außerhalb der Wärmekammer, der über ein Anschlußglied mit dem Bauteil zur Übertragung einer Schubkraft und/oder Zugkraft koppelbar ist. Damit können die Bauteile bei Fügetemperatur zusammengedrückt werden, um die Fügestelle zu stauchen. Weiterhin ist es möglich, die Fügestelle anschließend auch wieder zu strecken, wie dies oben bereits erläutert wurde. Je nach Gestaltung der Bauteile ist das Verschieben beider Bauteile zueinander möglich, oder aber es wird ein Bauteil mittels Anschlägen oder geeigneter Halteeinrichtungen fest positioniert und lediglich das zweite Bauteil verschoben. Im einfachsten Fall sind translatorische Bewegungseinrichtungen vorgesehen, beispielsweise in Form von Schlitten oder Schiebern, die z. B. über eine motorgetriebene Spindel translatorisch bewegbar sind. Bei einer Anordnung des Antriebs außerhalb der Wärmekammer kann über speziell angepaßte Übertragungselemente die Bewegung in die Wärmekammer und dort auf die Bauteile übertragen werden.

In einer weiteren, vorteilhaften Ausgestaltung der Vorrichtung ist weiterhin eine Fördereinrichtung zum gesteuerten Transport von Zusatzmaterial an die Fügestelle vorgesehen. Dabei ist die Fördereinrichtung an die Art des Zusatzmaterials angepaßt. Beispielsweise erfolgt die Zufuhr von pulverförmigem Material über Zuleitungen mit einer Arbeitsdüse zum Bearbeitungsort. Das Pulver wird dann durch die Arbeitsdüse definiert in den Fügebereich eingeblasen, wobei die Pulvermenge über die Fördereinrichtung variabel einstellbar ist. Werden feste Zusatzmaterialien, wie beispielsweise Glasstäbe, zugeführt, so ist eine entsprechend angepaßte Fördereinrichtung vorgesehen, um das stabförmige Zusatzmaterial während des Erwärmungsprozesses an die Fügestelle zu bringen. Selbstverständlich sind hierbei Stäbe mit unterschiedlichen Durchmessern und Längen förderbar.

### Kurze Beschreibung der Zeichnungen

Die Erfindung wird nachfolgend anhand von Ausführungsbeispielen näher erläutert. Die zugehörigen Zeichnungen zeigen in
- Fig.1: ein erstes Ausführungsbeispiel einer Vorrichtung zum thermischen Fügen von Bauteilen aus Silikat-Werkstoffen, wobei sich hier zwei gleichartige Bauteile in ihrer Fügeposition befinden,
- Fig.2: ein zweites Ausführungsbeispiel einer Vorrichtung zum thermischen Fügen entsprechend Fig.1, bei der ein X-Y-Scanner mit zwei bewegbaren Ablenkeinrichtungen zum Projizieren eines Laserstrahles auf die Fügestelle zum Einsatz kommt,
- Fig.3: ein drittes Ausführungsbeispiel einer Vorrichtung entsprechend Fig.1, bei der ein linear geführter Laserkopf zum Einsatz kommt,
- Fig.4: ein Beispiel, bei dem zwei Teilstrahlen von einer Seite auf die Fügestelle gerichtet werden,
- Fig.5: ein Beispiel in Entsprechung zu Fig.4, bei dem zwei Teilstrahlen über einen Strahlteiler erzeugt werden,
- Fig.6: ein Beispiel, bei dem zwei Laserstrahlen von gegenüberliegenden Seiten auf die Fügestelle treffen,
- Fig.7: eine Darstellung zur Veranschaulichung der Intensitätsverteilung in einem auf die Fügestelle aufgebrachten Laserlichtfleck,
- Fig.8: eine Darstellung zur Veranschaulichung der Zuführung von pulverförmigen Zusatzmaterial an die Fügestelle,
- Fig.9: eine Darstellung zur Veranschaulichung der Zuführung eines stabförmigen Zusatzmaterials an die Fügestelle,
- Fig.10: eine weiteres Ausführungsbeispiel einer Vorrichtung zum thermischen Fügen von Bauteilen aus Silikat-Werkstoffen mit aus der Wärmekammer hinausragenden Bauteilen und
- Fig.11: verschiedene Fügestellengeometrien, die mit einer Vorrichtung nach einem der vorgenannten Ausführungsbeispiele herstellt werden können.

### Ausführliche Beschreibung der Zeichnungen

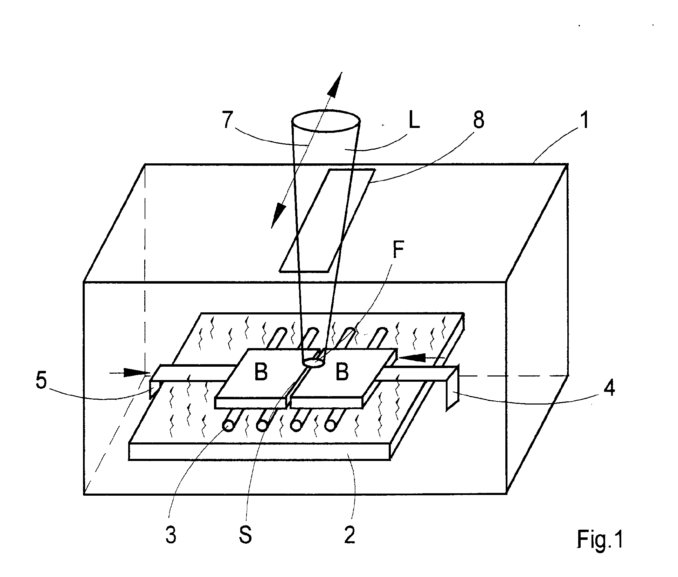

Das erste Ausführungsbeispiel zeigt in Fig.1 eine Vorrichtung zum thermischen Fügen von Bauteilen B aus Silikat-Werkstoffen. Diese Vorrichtung umfaßt eine nach außen isolierte Wärmekammer 1, in der ein Tisch 2 zur Halterung der Bauteile B vorgesehen ist. Die Bauteile B sind über temperaturunempfindliche, rollenförmige Auflageelemente 3 gegen den Tisch 2 abgestützt und befinden sich bereits in ihrer Fügeposition.

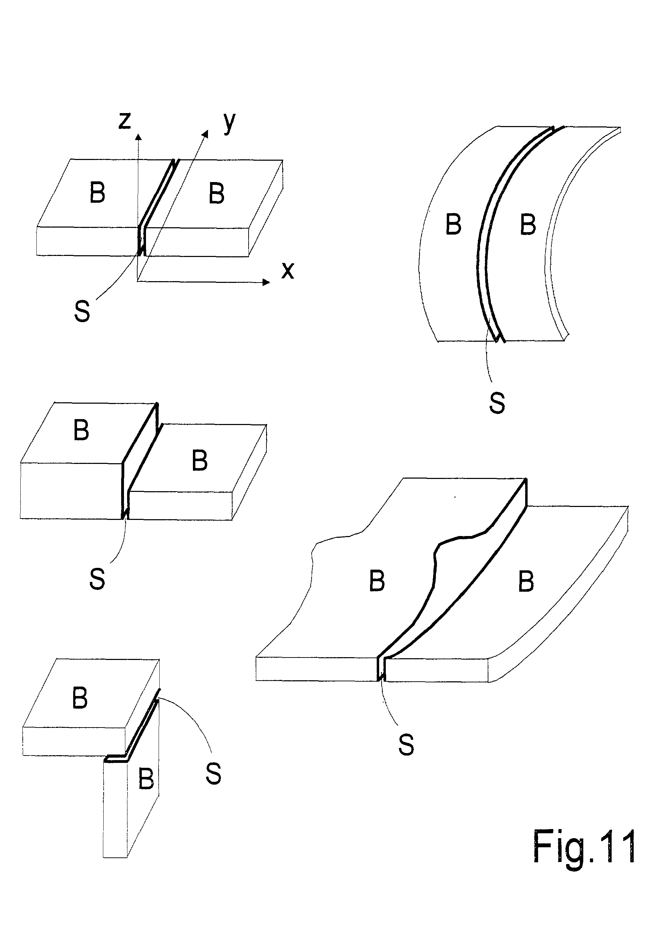

Die Auflageelemente 3 sind hier als Keramikrohre oder Keramikstäbe ausgebildet, die einen wesentlich höheren Schmelzpunkt als die Bauteile B aufweisen. Überdies besitzen die Auflageelemente 3 einen geringeren thermischen Ausdehnungskoeffizienten als die Bauteile B. Die Auflageelemente 3 sind auf dem Tisch 2 verschiebbar angeordnet und erlauben somit die Aufnahme und das Ausrichten von Bauteilen mit unterschiedlichsten Bauteilgeometrien, wie diese in Fig.11 beispielhaft dargestellt sind. Verfahrensbedingt müssen die Bauteile B während des Fügeprozesses in Abhängigkeit von ihrer Materialdicke um Beträge von 1/10mm bis 1mm verschoben werden, wie dies weiter unten noch näher erläutert wird. Dies wird durch die Auflageelemente 3 auf einfache Weise ermöglicht.

Weiterhin umfaßt die Vorrichtung zwei Bewegungseinrichtungen 4 und 5 in Form von Schiebern, welche über eine in Fig.1 nicht dargestellte, außerhalb der Wärmekammer 1 angeordnete Vorschubeinrichtung aufeinander zu und voneinander weg bewegt werden können. Die hierzu vorgesehene motorische Antriebseinrichtung sowie geeignete Kopplungsglieder zur Übertragung der Antriebskraft von der Antriebseinrichtung außerhalb der Wärmekammer 1 auf die Bauteile B innerhalb der Wärmekammer 1 sind in der Fig.1 ebenfalls nicht dargestellt.

In der Wärmekammer 1 ist weiterhin eine erste Heizeinrichtung angeordnet, die hier in Form einer in den Tisch 2 integrierten Heizplatte ausgebildet ist, um die Bauteile 1 auf eine Vorwärmtemperatur Tᵥ zu erwärmen. In der Heizplatte sind zu diesem Zweck eine Vielzahl von separat oder gruppenweise ansteuerbaren Heizquellen vorgesehen.

Die Vorwärmtemperatur T_{V} liegt knapp unterhalb des Erweichungspunktes T_{E} der miteinander zu verbindenden Bauteile B. In dem dargestellten Ausführungsbeispiel sind zwei borosilikatische Flachgläser (Duran) mit einem linearen Ausdehnungskoeffizienten von 3,25·10⁻⁶·K⁻¹ und mit einer Dicke von 1,5 mm gezeigt. Für diese beträgt die maximale Vorwärmtemperatur T_{V} etwa 700°C. Der Erweichungspunkt 820°C; die Schmelztemperatur T_{E} liegt in diesem Fall bei 1200°C.

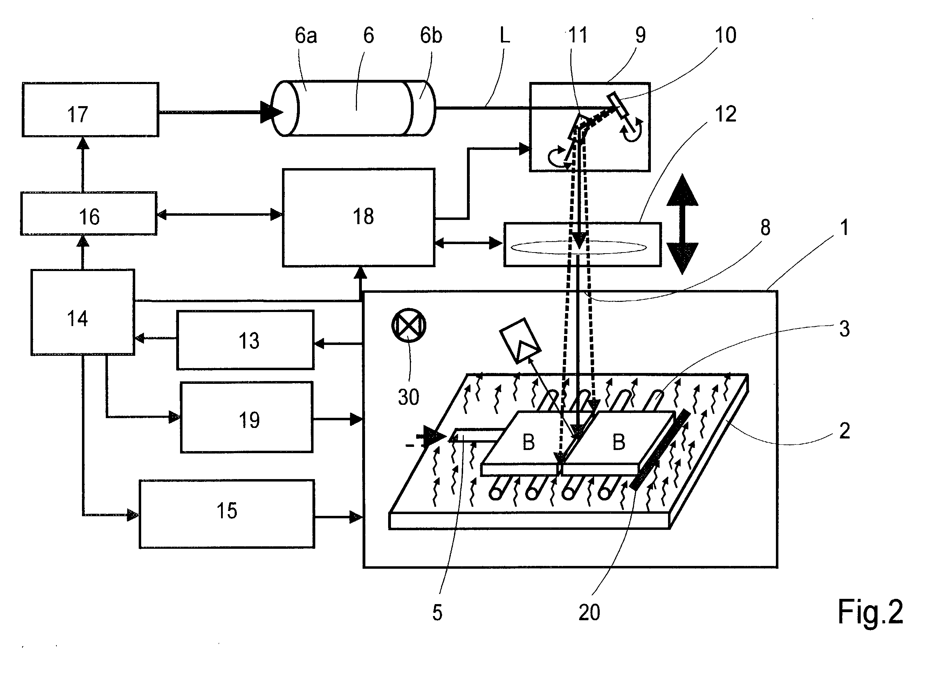

Zum Fügen der Bauteile B wird die Fügestelle S über die Vorwärmtemperatur T_{V} hinaus auf eine Fügetemperatur T_{F} gebracht, die hier geringfügig oberhalb des Erweichungspunktes T_{E} liegt, um die beiden Bauteile B in diesem Bereich aufzuschmelzen. Hierzu ist eine von der ersten Heizeinrichtung unabhängige zweite Heizeinrichtung vorgesehen, die eine Lasereinrichtung 6 mit einer Laserlichtquelle 6a umfaßt (vgl. Fig.2).

Der von der Laserlichtquelle 6a abgestrahlte Laserstrahl L wird über eine Fokussiereinheit 6b auf die Fügestelle S gerichtet. Über eine durch den Doppelpfeil in Fig.1 angedeutete Bewegungsrichtung 7 wird der Laserstrahl L bzw. genauer ein in dessen Auftreffpunkt an den Bauteilen B erzeugter Laserlichtfleck F über die Fügestelle S bewegt.

Bei dem in Fig.1 dargestellten Anwendungsfall ist die Fügestelle S linienförmig ausgebildet und besitzt eine Länge von etwa 1 50mm. Um die Fügestelle S mit einer solchen Länge gleichmäßig auf die Fügetemperatur T_{F} zu erwärmen, wird der Auftreffpunkt des Laserstrahls L mit einer Geschwindigkeit von ca. 500mm/s über die Fügestelle S bewegt. Dabei kommt eine Lasereinrichtung mit einer Wellenlänge von 10,6 um zum Einsatz, deren Leistungsabgabe im Bereich von 500 W bis 2000 W liegt. Je nach Anwendungsaufgabe wird ein kontinuierlicher Laserstrahl oder ein gepulster Laserstrahl eingesetzt.

Bei dem in Fig.1 dargestellten Ausführungsbeispiel ist die Laserlichtquelle 6a außerhalb der Wärmekammer 1 angeordnet. Der Laserstrahl L gelangt über eine Wärmeschleuse 8 in die Wärmekammer 1. Diese Wärmeschleuse 8 ist hier als ein laserlichtdurchlässiges, jedoch gasundurchlässiges Fenster ausgebildet, so daß über die Wärmeschleuse 8 keine Temperaturverluste an der Wärmekammer 1 auftreten. In einer abgewandelten Ausgestaltungsform kann die Wärmeschleuse 8 auch als Öffnung ausgebildet werden, in der ein quergeführter Gasstrom einen Wärmeverlust durch die Öffnung hindurch nach außen weitestgehend verhindert.

Fig.2 zeigt ein weiteres Ausführungsbeispiel für eine Vorrichtung zum thermischen Fügen von Bauteilen aus Silikat-Werkstoffen. Diese Vorrichtung umfaßt, wie die Vorrichtung des ersten Ausführungsbeispiels, eine Wärmekammer 1, einen Tisch 2 sowie Auflageelemente 3 zur Abstützung der miteinander zu fügenden Bauteile B. In den Tisch 2 ist wiederum eine Heizplatte integriert, in der eine Vielzahl von nicht einzeln dargestellten Heizquellen, beispielsweise in Form von elektrischen Heizstäben, verlaufen. Mit dieser ersten Heizeinrichtung können die zu fügenden Bauteile B auf die Vorwärmtemperatur T_{V} gebracht werden. Zur Unterstützung der Erwärmung ist in der Wärmekammer 1 zusätzlich eine Umlufteinrichtung 29 vorgesehen, um das Temperaturniveau in der Wärmekammer 1 zu vergleichmäßigen. Anstelle oder zusätzlich zu den elektrischen Heizstäben können als Heizquellen in der Wärmekammer Mikrobrenner vorgesehen werden. Auch kann wenigstens ein Teil des Wärmeeintrages zum Erwärmen auf die Vorwärmtemperatur T_{V} mit einer Mikrowellenheizung erfolgen.

Zur weiteren Erwärmung der Fügestelle S ist als zweite Heizeinrichtung die bereits erwähnte Lasereinrichtung 6 mit der Laserlichtquelle 6a und der Fokussiereinheit 6b zum Fokussieren des von der Laserlichtquelle 6a abgestrahlten Lichtes auf die Fügestelle S vorgesehen. Mittels einer Bewegungseinrichtung 9 wird der Laserstrahl L mit hoher Geschwindigkeit über die Fügestelle S bewegt. Dazu umfaßt die Bewegungseinrichtung 9 zwei bewegbare Ablenkeinrichtungen in Form von schwenkbaren Spiegeln 10 und 11, mit denen der Laserstrahl L entlang zweier orthogonaler Koordinaten abgelenkt werden kann, so daß sich in der Gesamtwirkung ein X-Y-Scanner ergibt. Die Spiegel 10 und 11 sind jeweils Teile einer Galvanometeranordnung, die über Tauchspulenmotoren angetrieben werden und aufgrund ihrer geringen Massen Scanngeschwindigkeiten bis zu 5 m/s an der Fügestelle S erlauben.

Die Fokussierung des Laserstrahls L erfolgt hier langbrennweitig, beispielsweise mit einer Brennweite von f=1 500 mm womit auch Fügestellenlängen in der Größenordnung von 1000 mm erreicht werden. Konstante Fokussierbedingungen über die gesamte Fügestellenlänge werden durch eine in den Strahlengang eingekoppelte Fokussieroptik 12, bevorzugt eine F-Theta-Optik, erreicht.

Bei dem in Fig.2 dargestellten Ausführungsbeispiel ist die Lasereinheit 6 sowie die Fokussieroptik 12 außerhalb der Wärmekammer 1 angeordnet, so daß in der Wärmekammer 1 auch hochschmelzende silikatische Werkstoffe bearbeitet werden können. Die Einkopplung des Laserstrahls L in die Wärmekammer 1 erfolgt wiederum durch eine Wärmeschleuse 8, wie sie bereits im Zusammenhang mit dem ersten Ausführungsbeispiel erläutert wurde.

Weiterhin zeigt Fig.2 in schematischer Darstellung die Temperatur- und Bewegungssteuerung der Vorrichtung. Um die zu fügenden Bauteile B in gewünschter Weise zu erwärmen, wird die Temperatur in der Wärmekammer 1 mittels Temperatursenoren 13 erfaßt und an eine zentrale Steuereinheit 14 übermittelt. Bevorzugt sind dabei eine Vielzahl von Temperatursensoren 13 in Form von Thermoelementen vorgesehen, die einzelnen Heizquellen 15 oder auch Gruppen von Heizquellen 15 der ersten Heizeinrichtung zugeordnet sind. Die Heizquellen 15 sind dann individuell ansteuerbar.

In der Steuereinheit 14 werden die erfaßten Ist-Temperaturen mit vorgegebenen Soll-Temperaturen verglichen und die Abweichung ermittelt. In Abhängigkeit der ermittelten Abweichungen werden wiederum die abzugebenden Wärmemengen ermittelt und an den Heizquellen 15 eingestellt. Dadurch läßt sich ein gewünschtes Temperaturfeld in der Wärmekammer 1 sehr gezielt einstellen und einhalten. Dies ist insbesondere bei komplizierter geformten Bauteilen B von Vorteil, da bei diesen ein ungleichmäßiger Wärmeeintrag erforderlich ist, um eine gleichmäßige Erwärmung zu erzielen. Beispielsweise kann ein Temperaturverlauf realisiert werden, bei dem die Temperatur von der Bauteilmitte zu der Fügestelle S hin kontinuierlich ansteigt. Insbesondere bei Bauteilen B, die nicht vollständig in der Wärmekammer 1 aufgenommen werden können, ist dies vorteilhaft, da dann zwischen der Fügestelle S mit der höchsten Temperatur und den außerhalb der Wärmekammer liegenden Abschnitten der Bauteile B, die sich zumeist auf Raumtemperatur befinden, ein Temperaturverlauf mit einem kleinen Temperaturgradienten eingestellt werden kann. Dazu sind die Heizquellen 15 nebeneinanderwirkend angeordnet und angesteuert.

Die zentrale Steuereinheit 14 ist mit einer Lasersteuerung 16 gekoppelt, mit welcher die Laserleistung sowie die Bewegung des Laserstrahls L über die Fügestelle S kontrolliert wird, um lediglich die Fügestelle S auf ein Temperaturniveau oberhalb der Vorwärmtemperatur T_{V} anzuheben und allein die Fügestelle S aufzuschmelzen. Da der Laserstrahl L mit schneller Geschwindigkeit über die Fügestelle S bewegt wird, hängt der Energieeintrag an jedem einzelnen Punkt der Fügestelle S sowohl von der Laserleistung, der Fokussierung des Laserstrahls L sowie der Bewegungsgeschwindigkeit ab.

Zur Einstellung des Leistungsniveaus der Laserlichtquelle 6a ist eine mit der Lasersteuerung 16 gekoppelte Ansteuereinrichtung 17 vorgesehen. Die Lasersteuerung 16 wirkt überdies mit einer Bewegungssteuereinrichtung 18 zusammen, mit welcher die Bewegung der Ablenkeinrichtungen 10 und 11 der Bewegungseinrichtung 9 und die Einstellung der Fokussieroptik 12 erfolgt. Durch eine gezielte Überlagerung der Bewegungen der beiden Ablenkeinrichtungen 10 und 11 kann beispielsweise eine schraubenförmige Bewegung des Laserlichtfleckes F über die Fügestelle S erzielt werden, um den Energieeintrag in die betreffenden Bauteile B zu variieren, d.h. beispielsweise dem einen Bauteil B mehr und dem anderen Bauteil B weniger Energie zuzuführen. Dies ist insbesondere dann von Vorteil, wenn Bauteile B mit unterschiedlichen Geometrien, unterschiedlichen Materialdicken oder unterschiedlichen Materialerschmelzungseigenschaften miteinander verbunden werden sollen, wobei im letztgenannten Fall auch die Erweichungspunkte T_{E} der Bauteile B verschieden sein können.

Das Erreichen der Fügetemperatur T_{F} wird durch der Fügestelle S zugeordneten Temperatursensoren erfaßt, die bevorzugt als Pyrometer ausgebildet sind. Diese Temperatursensoren sind in Fig.2 ebenfalls durch das Bezugszeichen 13 symbolisiert. Die Temperatur der Fügestelle S wird in gleicher Weise wie die Vorwärmtemperatur T_{V} geregelt, wobei die beiden Regelkreise auch miteinander verknüpft sein können, so daß die Lasereinrichtung 6 bereits zum Erwärmen der Bauteile B auf die Vorwärmtemperatur T_{V} verwendet werden kann. Dabei wird jedoch sichergestellt, daß zwischen der Fügestelle S und der Umgebung der Fügestelle kein starker Temperaturgradient auftritt.

Bei Erreichen der Fügetemperatur T_{F} werden die Bauteile B zusammengedrückt, um die Fügestelle S zu stauchen. Hierzu wird die in Fig.2 dargestellte Bewegungseinrichtung 5 aktiviert, um die beiden Bauteile B gemeinsam gegen den Anschlag 20 zu drücken. Die rollenartig ausgebildeten Auflageelemente 3 ermöglichen hierbei die für den Stauchvorgang erforderliche Relativbewegung gegenüber dem Tisch 2.

Ist keine Nachführung für den Laserstrahl L vorgesehen, so wird die Laserlichtquelle 6a unmittelbar vor dem Stauchen der Fügestelle S abgeschaltet. Die entsprechende Ansteuerung erfolgt über die zentrale Steuereinheit 14, welche die Vorschubeinrichtung 19 der Bewegungseinrichtung 5 aktiviert. Nach dem erfolgten Stauchen der Fügestelle S kann durch eine entgegengerichtete Bewegung der Vorschubeinrichtung 19 die Fügestelle S wieder gestreckt werden. Die Bewegungseinrichtung 5 weist dazu ein Ankopplungsglied auf, das sowohl die Übertragung einer Schubkraft als auch einer Zugkraft auf das mit dieser gekoppelte Bauteil B erlaubt.

Nach dem Stauchen und Strecken erfolgt eine temperaturgesteuerte Abkühlung der Bauteile B. Dabei wird die abklingende Temperatur in der Wärmekammer 1 mit den Temperatursensoren 13 überwacht. Überdies kann durch ein Einschalten der Umlufteinrichtung 29 die Abkühlung beschleunigt werden. Tritt an bestimmten Stellen eine zu hohe Abkühlgeschwindigkeit auf, so werden gegebenenfalls die entsprechenden Heizquellen 15 eingeschaltet, um die zu schnelle Abkühlgeschwindigkeit zu vermindern.

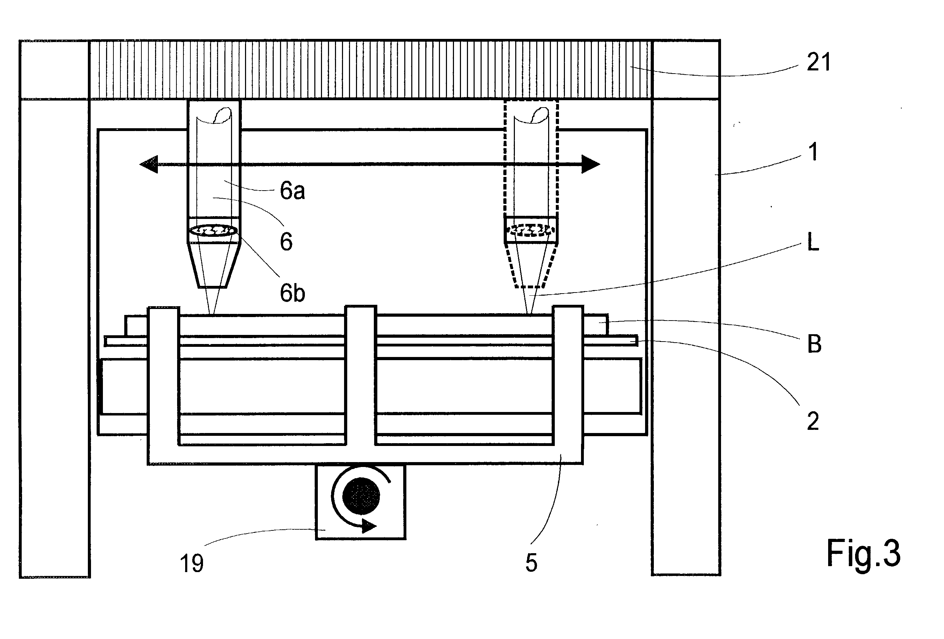

Ein weiteres Ausführungsbeispiel für eine Vorrichtung zum thermischen Fügen von Bauteilen aus Silikat-Werkstoffen ist in Fig.3 dargestellt. Diese wird im Folgenden lediglich insoweit beschrieben, als sie sich von der in Fig.2 dargestellten Vorrichtung unterscheidet. Wie Fig.3 entnommen werden kann, sitzt hier die Lasereinrichtung 6 mit der Laserlichtquelle 6a und der zugehörigen Fokussiereinrichtung 6b zur Ausrichtung des Laserstrahls L innerhalb der Wärmekammer 1. Dabei bildet die Laserlichtquelle 6a zusammen mit der Fokussiereinrichtung 6b einen Laserbearbeitungskopf, der als Einheit in der Wärmekammer 1 verfahrbar ist.

Die zugehörige Bewegungseinrichtung umfaßt dementsprechend eine Linearführung 21, an der der Laserbearbeitungskopf in Richtung einer Koordinate geführt ist. Weiterhin ist eine in Fig.3 nicht dargestellt Antriebseinrichtung vorgesehen, um den Laserbearbeitungskopf entlang der Linearführung 21 hin- und herzubewegen, so daß der Laserstrahl L über der Fügestelle S eine Pendelbewegung vollführt. Zur Ermöglichung von Bewegungen quer zu dieser Hauptbewegungsrichtung kann die Lasereinrichtung 6 schwenkbar ausgebildet werden oder der Laserstrahl L über Ablenkspiegel gezielt ausgelenkt werden. Weiterhin ist es möglich, den Laserbearbeitungskopf über einen Schlitten an der Linearführung 21 zu führen, der eine Querbewegung zu der Hauptbewegungsrichtung, die in Fig.3 durch einen Doppelpfeil angedeutet ist, zu bewegen.

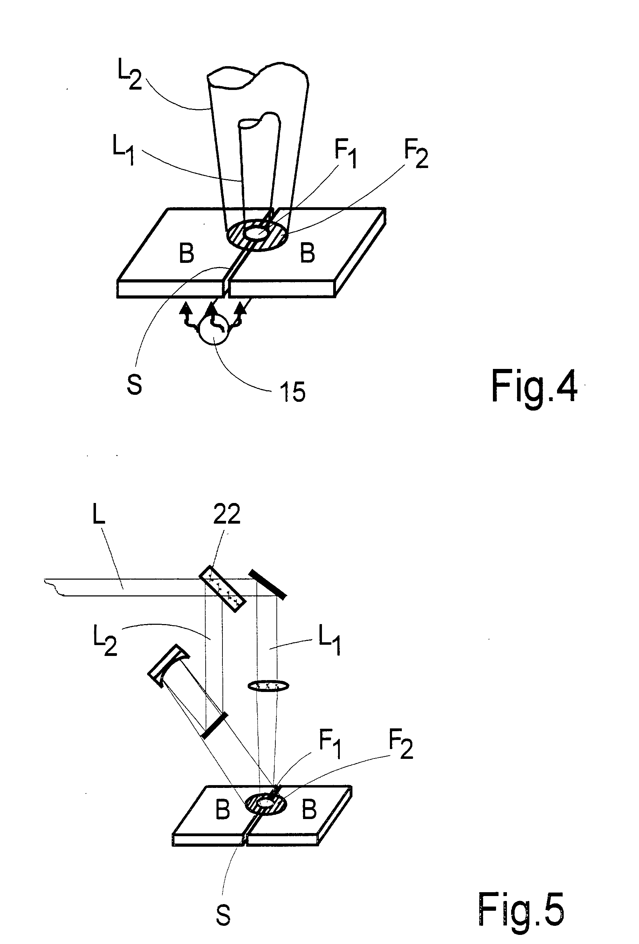

Fig.4 und Fig.5 zeigen die Möglichkeit der Aufteilung des Laserstrahls L in zwei Teilstrahlen L₁ und L₂, die bei jedem der vorstehend erläuterten Ausführungsbeispiele bei Bedarf genutzt werden kann. Hierzu wird, wie in Fig.5 dargestellt, in den Laserstrahl L ein Strahlteiler 22 in Form einer teils reflektierenden und teils durchlässigen Platte eingekoppelt. Beispielsweise kann hierzu eine ZnSe-Platte mit einem Teilungsverhältnis von 50/50 verwendet werden, um einen Laserstrahl L in zwei gleichartige Teilstrahlen L₁ und L₂ zu zerlegen.

Die beiden Teilstrahlen L₁ und L₂ können beispielsweise, wie in den Fig.4 und Fig.5 gezeigt, unterschiedlich auf eine Fügestelle S fokussiert werden. In dem dargestellten Beispiel wird der Teilstrahl L₁ schärfer fokussiert als zweite Teilstrahl L₂, so daß sich für den schärfer fokussierten Teilstrahl L₁ an der Fügestelle S ein kleinerer Laserlichtfleck F₁ mit einer höheren Intensität und damit einem höheren Wärmeeintrag in die Fügestelle S ergibt, als mit dem Laserlichtfleck F₂ des zweiten Teilstrahles L₂.

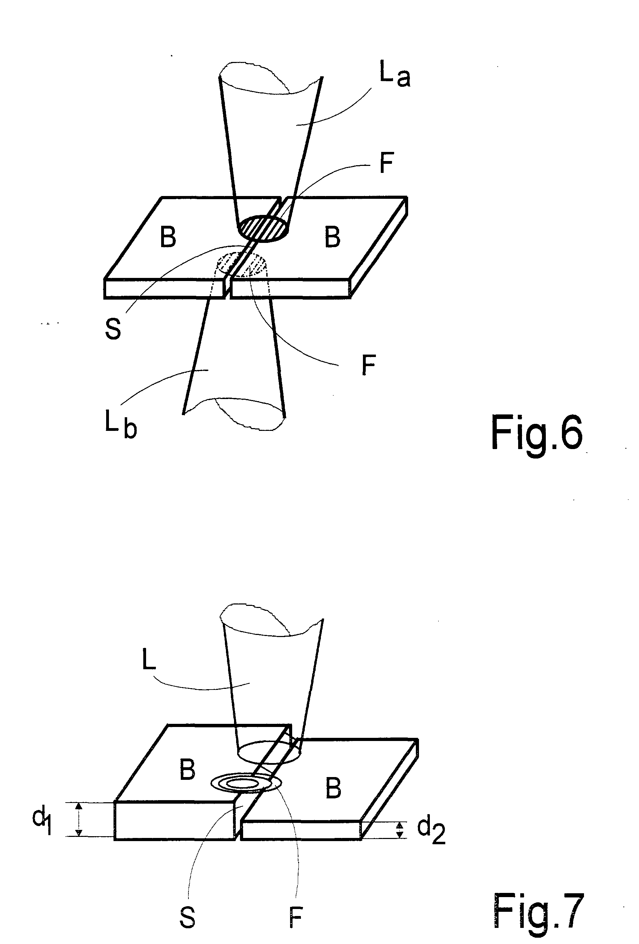

Insbesondere bei großen Materialdicken ist es vorteilhaft, die Fügestelle S von beiden Seiten zu erwärmen. Zum Erreichen der Fügetemperatur T_{F} können hierzu zwei einander gegenüberliegende Laserstrahlen Lₐ und L_{b} verwendet werden, wie in Fig.6 gezeigt. Diese können prinzipiell über vollkommen voneinander unabhängige Lasereinrichtungen 6 erzeugt werden, wie im Zusammenhang mit den Ausführungsbeispielen nach Fig.1 bis Fig.3 erläutert wurde.

Der apparative Aufwand läßt sich jedoch verringern, wenn zur Erzeugung der beiden Laserstrahlen Lₐ und L_{b} eine einzige Laserlichtquelle 6 verwendet wird, deren Strahl L in Entsprechung zu Fig.5 mittels eines Strahlteilers in zwei Teilstrahlen aufgespalten und mittels geeigneter Leiteinrichtungen an die Fügestelle S gelenkt wird. Die beiden Laserlichtstrahlen Lₐ und L_{b} können überdies, wie in Fig.4 und Fig.5 gezeigt, jeweils in zwei unterschiedlich fokussierende Teilstrahlen L₁ und L₂ weiter aufgespalten werden.

Durch den Einsatz eines Strahlformers läßt sich weiterhin, wie in Fig.7 dargestellt, die Verteilung der Strahlungsintensität innerhalb eines von dem Laserstrahl L erzeugten Lichtflecks F beeinflussen. Zur Strahlformung kommen beispielsweise Teleskopanordnungen oder diffraktive optische Elemente zum Einsatz. Die damit erzielbare Intensitätsverteilung in dem Laserlichtfleck F kann dazu ausgenutzt werden, um beispielsweise Bauteile unterschiedlicher Materialdicken d₁ und d₂ oder mit unterschiedlichen Materialerschmelzungseigenschaften gleichmäßig aufzuschmelzen.

Weiterhin kann der Fügestelle S Zusatzmaterial Z zugeführt werden, um Spalten zwischen den Bauteilen B an der Fügestelle S oder Materialverluste beim Aufschmelzen auszugleichen. Überdies lassen sich durch Zusatzmaterialien Z die Eigenschaften der Fügestelle S beeinflussen. Vorzugsweise sind die Zusatzmaterialien Z ebenfalls Silikat-Werkstoffe. Es können jedoch auch andere Werkstoffe zugeführt werden, wobei dies in beiden Fällen in pulverförmiger, flüssiger oder fester Form erfolgen kann. Auch ist es möglich an die Fügestelle ein Inertgas zuzuführen.

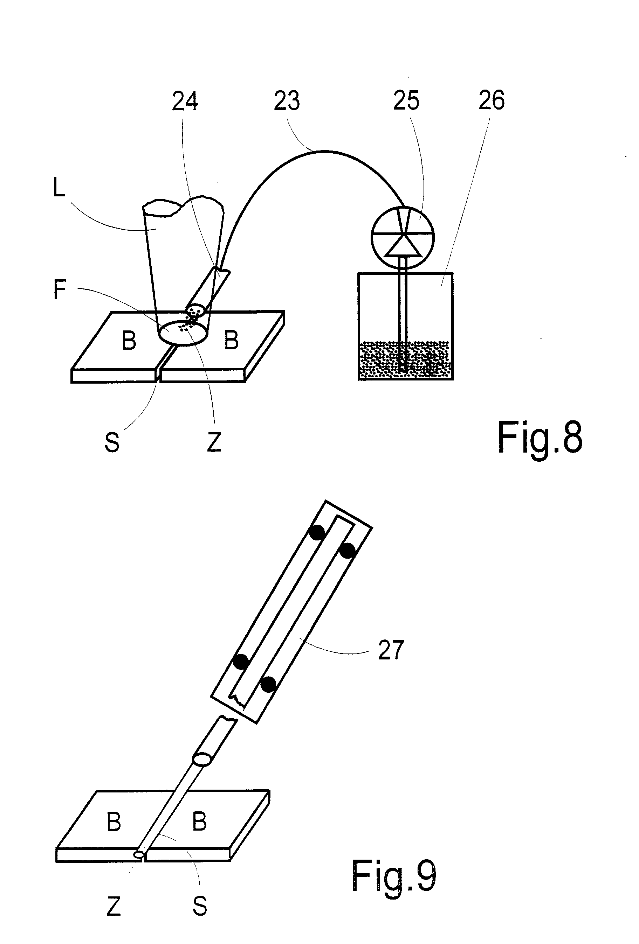

Fig.8 zeigt beispielhaft die Zuführung eines pulverförmigen Zusatzmaterials Z in Form eines Silikat-Werkstoffes. Dieses pulverförmige Zusatzmaterial Z wird über eine Zuleitung 23 und eine Arbeitsdüse 24 auf die Fügestelle S geblasen. Hierzu ist ein Kompressor 25 vorgesehen, der gleichzeitig auch das an die Fügestelle S zu verbringende Zusatzmaterial Z aus einem Vorratsbehälter 26 ansaugt. Mittels des Kompressors 25 ist die an die Fügestelle S gebrachte Menge des Zusatzmaterials Z gezielt einstellbar.

Fig.9 zeigt ein weiteres Beispiel für die Zufuhr eines festen Zusatzmaterials Z, das in Stabform an die Fügestelle S transportiert wird. Hierzu wird in der Wärmekammer 1 eine Stabzuführeinrichtung 27 angeordnet, mit welcher Stabmaterialien unterschiedlicher Dicke und Länge gefördert werden können. Das zugeführte Zusatzmaterial Z wird an der Fügestelle S aufgeschmolzen und verbindet sich stoffschlüssig mit den zu fügenden Bauteilen B.

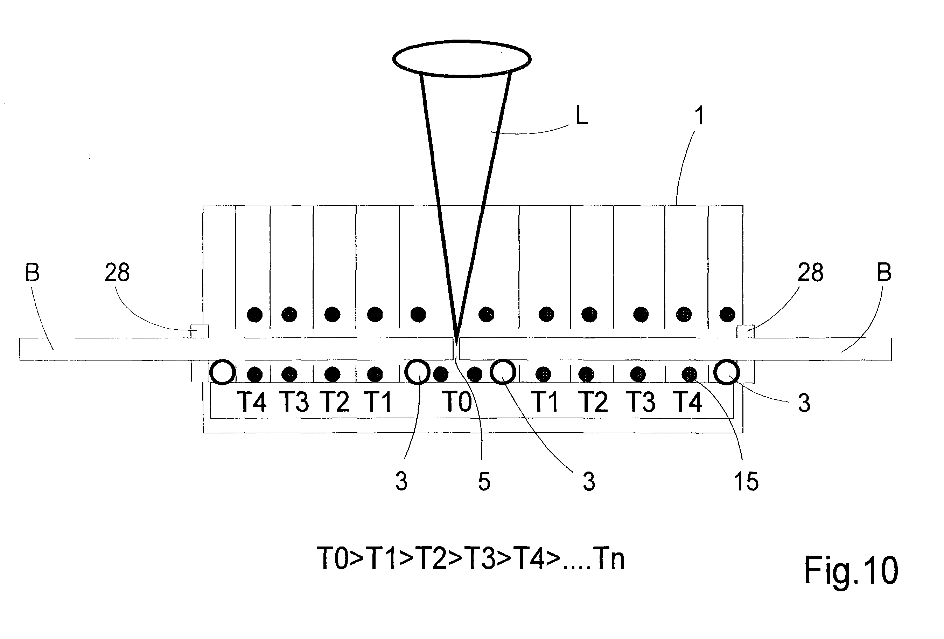

In Fig.10 ist ein weiteres Ausführungsbeispiel einer Vorrichtung zum thermischen Fügen von Bauteilen B aus Silikat-Werkstoffen dargestellt, das sich insbesondere für das thermische Verbinden von sehr großen bzw. sehr langen Bauteilen B eignet. Diese Vorrichtung ist insbesondere in bezug auf ihre Heizeinrichtungen entsprechend dem in Fig.2 dargestellten Ausführungsbeispiel ausgebildet.

Im Unterschied zu Letzterem weist die Wärmekammer 1 jedoch zwei Bauteilschleusen 28 auf, über welche eines oder auch beide Bauteile B während des Fügevorganges aus der Wärmekammer 1 hinausragen können. Die Bauteilschleusen 28 dichten dabei die Wärmekammer 1 gegen das betreffende Bauteil B ab.

Es ist jedoch auch möglich, die in Fig.10 dargestellte Wärmekammer 1 als Durchlaufkammer auszubilden, wobei die Bauteilschleusen 28 größere Öffnungen darstellen, in denen zur thermischen Isolierung der Wärmekammer 1 ein sperrender Gasstrom quer zur Erstreckungsrichtung der Öffnung geführt werden kann.

Wie Fig.10 weiter zu entnehmen ist, sind die Heizquellen 15 der ersten Heizeinrichtung nebeneinanderwirkend und hier in Längsrichtung nebeneinanderliegend angeordnet, so daß in der Wärmekammer 1 und insbesondere in den Bauteilen B ein Temperaturfeld von T₄ bis T₀ einstellbar ist, das zu der Fügestelle S hin gleichmäßig ansteigt. Hierdurch werden steile Temperaturgradienten sowohl in der Erwärmungsphase als auch in der Abkühlphase vermieden. Durch eine individuelle Temperaturregelung der einzelnen Heizquellen 15 läßt sich ein gewünschtes Temperaturgefälle sehr präzise einhalten.

Mit dem vorstehend erläuterten Verfahren und zugeordneten Vorrichtungen lassen sich hochfeste Verbindungen von Bauteilen aus Silikat-Werkstoffen herstellen, die sich durch sehr geringe temperaturinduzierte Spannungen auszeichnen. Insbesondere können ebene oder auch beliebig räumlich geometrische Bauteile aus Silikat-Werkstoffen in sehr hoher Qualität spannungsarm gefügt werden.

## Patentansprüche

1. Verfahren zum thermischen Fügen von Bauteilen aus silikatischen Werkstoffen, Silikat-Verbundwerkstoffen und Silikat-Kompositwerkstoffen an einer Fügestelle, wobei
die miteinander zu fügenden Bauteile (B) wenigstens in einem Bereich um ihre Fügestelle (S) auf eine Vorwärmtemperatur (T_{V}) unterhalb ihres Erweichungspunktes (T_{E}) erwärmt werden und
in die erwärmten Bauteile (B) an der Fügestelle (S) zusätzliche Wärmeenergie eingebracht wird, um die Bauteile (B) an der Fügestelle (S) auf eine Fügetemperatur (T_{F}) zu erwärmen, die bei oder oberhalb der Temperatur des jeweiligen Erweichungspunktes (T_{E}) liegt.

2. Verfahren nach Anspruch 1, **dadurch gekennzeichnet, daß** die zusätzliche Wärmeenergie mit mindestens einem Laserstrahl (L) eingebracht wird.

3. Verfahren nach Anspruch 2, **dadurch gekennzeichnet, daß** der Laserstrahl (L) scannend entlang der Fügestelle (S) bewegt wird.

4. Verfahren nach Anspruch 3, **dadurch gekennzeichnet, daß** der Laserstrahl (L) mehrfach entlang der Fügestelle (S) bewegt wird.

5. Verfahren nach Anspruch 4, **dadurch gekennzeichnet, daß** der Laserstrahl (L) mehrfach stets in der gleichen Richtung entlang der Fügestelle (S) bewegt wird.

6. Verfahren nach Anspruch 4, **dadurch gekennzeichnet, daß** der Laserstrahl (L) mehrfach entlang der Fügestelle (S) hin- und herbewegt wird.

7. Verfahren nach einem der Ansprüche 2 bis 6, **dadurch gekennzeichnet, daß** der Laserstrahl (L) mit einer Geschwindigkeit im Bereich von 0,25 bis 10m/s, vorzugsweise mit einer Geschwindigkeit im Bereich von 0,5 bis 3m/s entlang der Fügestelle (S) bewegt wird.

8. Verfahren nach einem der Ansprüche 3 bis 7, **dadurch gekennzeichnet, daß** einer Bewegung in Richtung der Fügestelle (S) eine Bewegungskomponente quer zu dieser Richtung überlagert wird.

9. Verfahren nach einem der Ansprüche 1 bis 8, **dadurch gekennzeichnet, daß** Wärmeenergie mit zwei Laserstrahlen (L₁, L₂, Lₐ, L_{b}) eingebracht wird.

10. Verfahren nach Anspruch 9, **dadurch gekennzeichnet, daß** beide Laserstrahlen (Lₐ, L_{b}) von gegenüberliegenden Seiten auf die Fügestelle (S) gerichtet werden.

11. Verfahren nach Anspruch 9 oder 10, **dadurch gekennzeichnet, daß** einer der Laserstrahlen (L₁, L₂) schärfer auf die Fügestelle (S) fokussiert wird als der andere Laserstrahl.

12. Verfahren nach einem der Ansprüche 1 bis 11, **dadurch gekennzeichnet, daß** die Intensität des auftreffenden Laserlichtflecks (F) in Abhängigkeit von den Schmelz-eigenschaften und/oder der Geometrie der Bauteile (B) eingestellt wird, wobei auf Bauteile (B), die sich in dieser Hinsicht unterscheiden, Abschnitte des Laserlichtflecks (F) mit unterschiedlicher Intensität gerichtet werden.

13. Verfahren nach einem der Ansprüche 1 bis 12, **dadurch gekennzeichnet, daß** beide zu fügenden Bauteile (B) bei Erreichen der Fügetemperatur (T_{F}) in Richtung auf ihre gemeinsame Fügestelle (S) gegeneinander gestaucht werden.

14. Verfahren nach einem der Ansprüche 1 bis 13, **dadurch gekennzeichnet, daß** die Bauteile (B) nach erfolgtem Verbinden in entgegengesetzten Richtungen Krafteinwirkungen unterworfen und dabei die Fügestelle (S) gestreckt wird.

15. Verfahren nach einem der Ansprüche 1 bis 14, **dadurch gekennzeichnet, daß** die Bauteile (B) nach erfolgtem Verbinden temperaturgesteuert abgekühlt werden.

16. Verfahren nach einem der Ansprüche 1 bis 15, **dadurch gekennzeichnet, daß** während des Erwärmens in den Bauteilen (B) ein Temperaturfeld induziert wird, das zu der Fügestelle (S) hin einen ansteigenden Temperaturgradienten aufweist.

17. Verfahren nach einem der Ansprüche 1 bis 16, **dadurch gekennzeichnet, daß** zum Zeitpunkt des Erreichens der Fügetemperatur (T_{F}) ein den Fügeprozeß förderndes Zusatzmaterial in die Fügestelle (S) eingebracht wird.

18. Verfahren nach einem der Ansprüche 1 bis 17, **dadurch gekennzeichnet, daß** beide Bauteile (B) bereits vor dem Erwärmen in vorgegebenen Positionen fixiert und dabei zueinander ausgerichtet werden.

19. Vorrichtung zum thermischen Fügen von Bauteilen aus silikatischen Werkstoffen, Silikat-Verbundwerkstoffen und Silikat-Kompositwerkstoffen an einer Fügestelle, umfassend:
eine erste Heizeinrichtung zum Erwärmen der Bauteile (B) mindestens im Bereich der Fügestelle (S) auf eine Vorwärmtemperatur (T_{V}) unterhalb ihres Erweichungspunktes (T_{E}) und
eine zweite Heizeinrichtung zum zusätzlichen Eintrag von Wärmeenergie in die Fügestelle (S), um die vorerwärmte Fügestelle (S) auf eine Fügetemperatur (T_{F}) bis zur oder über die Temperatur des jeweiligen Erweichungspunktes (T_{E}) weiter zu erwärmen.

20. Vorrichtung nach Anspruch 19, **dadurch gekennzeichnet, daß** die zweite Heizeinrichtung mindestens eine Lasereinrichtung (6) mit einer Laserlichtquelle (6a) und mit einer Fokussiereinheit (6b, 12) zum Fokussieren des von der Laserlichtquelle (6a) abgestrahlten Laserlichtes (L) auf die Fügestelle (S) aufweist.

21. Vorrichtung nach Anspruch 20, **dadurch gekennzeichnet, daß** Einrichtungen zur Bewegung des von dem Laserstrahl (L) erzeugten Laserlichtflecks (F) entlang der Fügestelle (S) vorgesehen sind.

22. Vorrichtung nach Anspruch 21, **dadurch gekennzeichnet, daß** zur Bewegung des Laserlichtflecks (F) Linearführungen (21) vorgesehen sind, an denen eine Lasereinrichtung (6) fixiert und dabei mit einem Antrieb verbunden ist.

23. Vorrichtung nach Anspruch 21, **dadurch gekennzeichnet, daß** die Lasereinrichtung (6) stationär angeordnet und eine Ablenkeinrichtung vorgesehen ist, um den Laserlichtfleck (F) über die Fügestelle (S) hinweg zu scannen.

24. Vorrichtung nach Anspruch 23, **dadurch gekennzeichnet, daß** die Ablenkeinrichtung schwenkbare oder rotierenden Spiegel (10, 11) aufweist.

25. Vorrichtung nach einem der Ansprüche 21 bis 24, **dadurch gekennzeichnet, daß** die Einrichtungen zum Bewegen des Laserstrahls (L) Mittel zur Überlagerung einer zweiten Bewegungskomponente im wesentlichen quer zu einer ersten Bewegungskomponente umfassen.

26. Vorrichtung nach einem der Ansprüche 19 bis 25, **dadurch gekennzeichnet, daß** eine Wärmekammer (1) zur Aufnahme der Fügestelle (S) der miteinander zu fügenden Bauteile (B) vorgesehen ist, wobei die erste Heizeinrichtung in der Wärmekammer (1) angeordnet ist.

27. Vorrichtung nach Anspruch 26, **dadurch gekennzeichnet, daß** die Lasereinrichtung (6) außerhalb der Wärmekammer (1) angeordnet ist und die Wärmekammer (1) eine laserlichtdurchlässige Wärmeschleuse (8) zur Hindurchführung des Laserstrahls (L) aufweist.

28. Vorrichtung nach Anspruch 27, **dadurch gekennzeichnet, daß** die Wärmeschleuse (8) durch ein für das Laserlicht (L) durchlässiges, jedoch für Gase undurchlässiges Fenster gebildet ist.

29. Vorrichtung nach Anspruch 27, **dadurch gekennzeichnet, daß** die Wärmeschleuse (8) eine Öffnung zur Hindurchführung des Laserstrahls (L) ist und Querrichtung zum Laserstrahl (L) ein Gasstrom durch die Öffnung geführt ist.

30. Vorrichtung nach einem der Ansprüche 20 bis 29, **dadurch gekennzeichnet, daß** ein Strahlteiler (22) zur Aufspaltung des von der Laserlichtquelle (6a) kommenden Laserstrahls (L) in zwei auf die Bauteile (B) ausrichtbare Teilstrahlen (L₁, L₂, Lₐ, L_{b}) vorgesehen ist.

31. Vorrichtung nach Anspruch 30, **dadurch gekennzeichnet, daß** einer der Teilstrahlen über die Umgebung der Fügestelle (S) geführt ist und allein die erste Heizeinrichtung bildet oder Teil der ersten Heizeinrichtung ist.

32. Vorrichtung nach Anspruch 30, **dadurch gekennzeichnet, daß** die beiden Teilstrahlen (Lₐ, L_{b}) von gegenüberliegenden Seiten auf die Fügestelle (S) gerichtet sind.

33. Vorrichtung nach einem der Ansprüche 20 bis 32, **dadurch gekennzeichnet, daß** eine Einrichtung zur Beeinflussung der Querschnittsgeometrie des Laserlichtflecks (F) und/oder zur Beeinflussung der Strahlungsintensität im Querschnitt des Laserlichtflecks (F) vorgesehen ist.

34. Vorrichtung nach einem der Ansprüche 19 bis 33, **dadurch gekennzeichnet, daß** die erste Heizeinrichtung mehrere Heizquellen (15) umfaßt, die einzeln oder in Gruppen separat ansteuerbar sind.

35. Vorrichtung nach Anspruch 34, **dadurch gekennzeichnet, daß** eine Steuereinrichtung (14) zur Einstellung der abzugebenden Wärmemengen der Heizquellen (15) vorgesehen ist.

36. Vorrichtung nach Anspruch 35, **dadurch gekennzeichnet, daß** den getrennt angesteuerten Heizquellen (15) Temperatursensoren (13) zugeordnet sind, die zur Erfassung einer Ist-Temperatur dienen, und daß in der Steuereinrichtung (14) eine Differenzbildung zwischen der Ist-Temperatur und einer Soll-Temperatur vorgesehen ist und die abzugebende Wärmemenge in Abhängigkeit der ermittelten Differenz vorgegeben wird.

37. Vorrichtung nach Anspruch 36, **dadurch gekennzeichnet, daß** als Temperatursensoren (13) Thermoelemente vorhanden sind.

38. Vorrichtung nach einem der Ansprüche 19 bis 37, **dadurch gekennzeichnet, daß** mindestens ein der Fügestelle (S) zugeordneter Temperatursensor (13) vorgesehen ist und die zusätzlich über die zweite Heizeinrichtung eingebrachte Wärmemenge in Abhängigkeit von der an der Fügestelle (S) erfaßten Ist-Temperatur vorgegeben wird.

39. Vorrichtung nach Anspruch 38, **dadurch gekennzeichnet, daß** der bzw. die der Fügestelle (S) zugeordneten Temperatursensoren (13) als Pyrometer ausgebildet sind.

40. Vorrichtung nach einem der Ansprüche 26 bis 39, **dadurch gekennzeichnet, daß** die erste Heizeinrichtung mit einer Einrichtung zur Erzeugung eines Umluftstromes kombiniert ist.

41. Vorrichtung nach einem der Ansprüche 19 bis 40, **dadurch gekennzeichnet, daß** mindestens eine Einrichtung (4, 5) zum Bewegen der Bauteile (B) relativ zueinander vorgesehen ist.

42. Vorrichtung nach Anspruch 41, **dadurch gekennzeichnet, daß** ein Vorschubantrieb außerhalb der Wärmekammer (1) anordnet ist, der über ein Anschlußglied mit einem der Bauteile (B) zur Übertragung einer Schubkraft oder Zugkraft verbunden ist.

43. Vorrichtung nach einem der Ansprüche 19 bis 42, **dadurch gekennzeichnet, daß** eine Fördereinrichtung zum gesteuerten Transport von Zusatzmaterial (Z) an die Fügestelle (S) vorgesehen ist.
